# NEUE EUROPÄISCHE PATENTSCHRIFT

(11) **EP 0 085 410 B2**
(45) Veröffentlichungstag und Bekanntmachung des Hinweises auf die Entscheidung über den Einspruch: **08.09.1993**
(45) Hinweis auf die Patenterteilung: 15.04.1987
(21) Anmeldenummer: 83100783.6
(22) Anmeldetag: 27.01.1983
(51) Int. Cl.: E06B 3/26

(54) **Verfahren zum Verbinden der metallischen Innen- und Aussenteile eines Verbundprofils**
Process for joining the metallic inner and outer parts of a composite profile member
Procédé pour réunir les parties métalliques intérieures et extérieures d'un profile composite

(30) Priorität: 03.02.1982 DE 3203631; 09.06.1982 DE 3221797
(43) Veröffentlichungstag der Anmeldung: 10.08.1983
(73) Patentinhaber: Ensinger, Wilfried, D-71154 Nufringen (DE)
(72) Erfinder: Ensinger, Wilfried, D-7031 Nufringen (DE); Pellkofer, Erich, D-6704 Mutterstadt (DE); Nielebock, Joachim, D-6704 Mutterstadt (DE)
(74) Vertreter: Hoeger, Stellrecht & Partner

(56) Entgegenhaltungen:
- EP-A- 0 043 968
- DE-A- 2 361 323
- DE-A- 2 412 317
- DE-A- 2 625 533
- DE-A- 2 745 166
- DE-A- 2 829 563
- DE-A- 3 116 716
- DE-A- 3 203 631
- DE-A- 3 227 509
- DE-B- 1 036 496
- DE-B- 2 714 378
- FR-A- 1 395 244
- FR-A- 2 303 228
- GB-A- 2 058 893
- GB-A- 2 083 116
- US-A- 3 411 254
- Kunststoff Taschenbuch (Saechtling) 22. Ausgabe, Seiten 176-179

## Beschreibung

Die Erfindung betrifft ein Verfahren zum Verbinden der metallischen Innen- und Außenteile eines Verbundprofils mit einem Isoliersteg nach dem Oberbegriff des Patentanspruchs 1.

Ein solches Verfahren ist aus der EP-A-0 043 968 bekannt, wobei das Zusatzmaterial aus einem Kleber bestehen kann, der durch Schäumung expandierbar ist.

Bei Ausübung des bekannten Verfahrens kann es vorkommen, daß das sich expandierende, klebende Zusatzmaterial nicht in alle Zwischenräume zwischen dem Isoliersteg einerseits und den Innen- und Außenteilen andererseits eindringt und dort seine Klebefunktion nicht ausübt. Hierdurch kann die Festigkeit des Verbunds beeinträchtigt sein.

Es ist aus der DE-A-2 412 317 bei einem Verbundprofil anderer Art ferner bekannt, in großräumige Aussparungen an den Enden einer als Isolierleiste dienenden Zwischenlage eine expandierfähige Zwischenschicht einzubringen und die mit den Metallteilen des Profiles bei der Expansion der Zwischenschicht zum Eingriff kommenden Flächen der Zwischenlage ganz oder teilweise mit einem durch Wärme aktivierbaren Klebstoff zu beschichten, wobei vorgesehen ist, diesen Klebstoff auf die Isolierleisten der Zwischenlage aufzubringen. Bei diesem Verbundprofil werden jedoch vor der Expansion der Zwischenschicht die Stege, welche die die Enden der Isolierleisten aufnehmenden Nuten begrenzen, nicht an die Isolierleisten herangedrückt, sodaß insoweit das Verbundprofil nicht dicht ist und der Klebstoff bei der Expansion der Zwischenschicht aus dem Verbundprofil herausgepreßt werden kann, ohne seine Klebewirkung im Profil zu entfalten.

Es ist Aufgabe der Erfindung, das gattungsgemäße Verfahren gemäß der EP-A-043 968 so zu verbessern, daß das klebende Zusatzmaterial in die Zwischenräume zwischen dem Isoliersteg und den Innen- und Außenteilen sicher eindringt und dort zu einer verstärkten Klebeverbindung führt.

Die Aufgabe wird erfindungsgemäß durch die kennzeichnenden Merkmale des Patentanspruchs 1 gelöst.

Der sich ausdehnende Körper schiebt also gewissermaßen einen fließfähigen Kleber unter Druck zu den Klebestellen hin, wobei die vorher an den Isoliersteg angedrückten Nutstege ein Ausfließen des Klebers aus dem Verbundprofil heraus verhindern.

Ausführungsformen des Verfahrens sind Gegenstand der Ansprüche 2 bis 15.

Die nachstehende Beschreibung bevorzugter Ausführungsformen der Erfindung dient im Zusammenhang mit beiliegender Zeichnung der weiteren Erläuterung. Es zeigen :
Figur 1 eine schaubildliche Schnittansicht eines Verbundprofils für Fenster, Türen, Fassadenelemente oder dgl. ;
Figur 2 einen Klebedraht aus einem von einem Mantel umhüllten Körper ;
Figuren 3 und 4 Teilansichten des Bereiches A in Fig. 1 zur Darstellung von Verfahren zur Verbesserung der Festigkeit zwischen Verbundprofilteilen und einem Isoliersteg ;
Figuren 5 und 6 abgewandelte Ausführungsformen des Klebedrahtes aus Fig. 2 ;
Figuren 7 und 8 weitere Teilansichten des Bereiches A in Fig. 1 zur Darstellung weiterer Verfahren zur Herstellung von Klebeverbindungen zwischen Verbundprofilteilen und einem Isoliersteg.

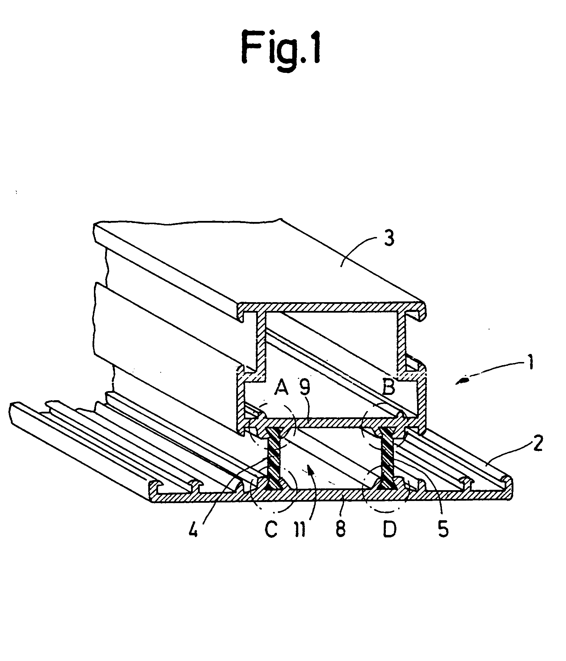

Die Fig. 1 zeigt ein z.B. für die Herstellung von Fenstern, Türen, Fassadenelementen oder dergleichen geeignetes Metall-Verbundprofil 1 mit einem Innenteil 2 und einem Außenteil 3, die beide durch zwei längsverlaufende Isolierstege 4, 5 miteinander verbunden sind. Die Teile 2, 3 können beispielsweise aus Aluminium, Aluminiumlegierung oder Stahl bestehen. Die Isolierstege 4, 5, welche eine wärmedämmende Brücke zwischen den Teilen 2, 3 herstellen, bestehen aus hochfestem Kunststoff mit schlechten Wärmeleitungseigenschaften, beispielsweise aus glasfaserverstärktem Polyamid.

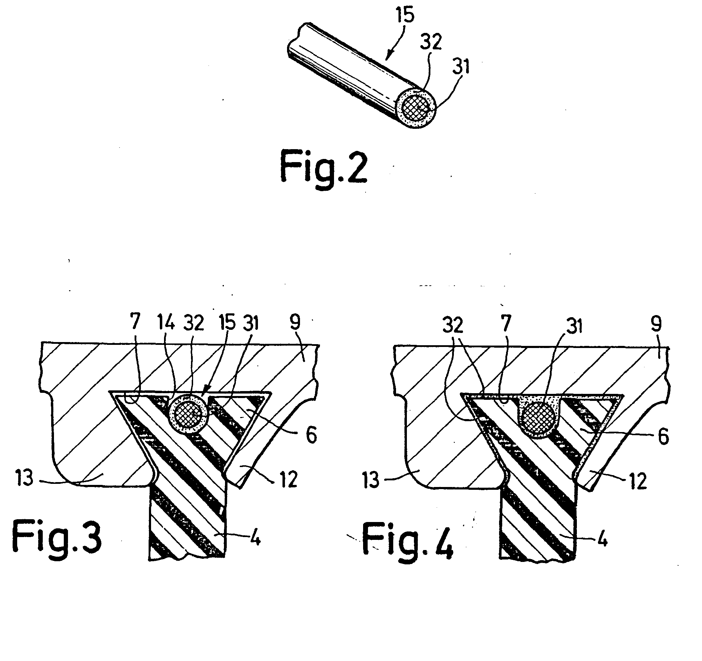

Die Isolierstege 4, 5 ragen mit ihren im Querschnitt schwalbenschwanzförmig ausgebildeten Enden 6 in entsprechend ausgebildete, längs verlaufende Nuten 7 der verbundprofilteile 2, 3 hinein, vgl. Fig. 3. Dabei bildet sich im fertigen Verbundprofil zwischen den Isolierstegen 4, 5 und Wandabschnitten 8, 9 der Teile 2 bzw. 3 eine längsweise durchgehende Kammer 11 aus. Die Isolierstege 4, 5 werden zunächst mit ihren Enden längsweise in die Nuten 7 eingesetzt, beispielsweise eingezogen. Anschließend wird in Längsrichtung des Profils ein Ziehdorn durch die Kammer 11 hindurchgezogen, wodurch die in dieser Kammer liegenden, die Nut 7 begrenzenden Stege (in Fig. 3 mit 12 bezeichnet) an die Enden 6 der Isolierstege 4, 5 angedrückt werden, so daß die Isolierstege 4, 5 schließlich zwischen dem erwähnten Steg 12 und einem gegenüberliegenden Nutensteg (in Fig.3 mit 13 bezeichnet) kraft- und formschlüssig gehalten sind.

Die Fig. 3, 4, 7 und 8 zeigen jeweils Ausschnitte im Bereich des in Fig. 1 mit A bezeichneten Kreises. Verschiedene Ausführungsformen erfindungsgemäßer Verfahren werden anschließend unterZugrundelegung dieses Ausschnittes anhand der erwähnten Figuren erläutert. Diese Ausführungen beziehen sich in gleicher Weise auch auf die in Fig. 1 mit A, B, C und D bezeichneten Kreisbereiche, an denen jeweils gleiche Maßnahmen getroffen werden.

Bei der Ausführungsform gemäß Fig. 3 wird in eine längs verlaufende Ausnehmung 14 am schwalbenschwanzförmigen Ende 6 des Isoliersteges 4 ein Zusatzmaterial in Gestalt einer biegsamen Schnur oder eines biegsamen Drahtes 15 eingelegt und durch entsprechende Verformung des Nutenstegs 12 gemeinsam mit dem Ende 6 in der von diesem Steg und dem gegenüberliegenden Nutensteg 13 gebildeten Nut eingeschlossen. Der Durchmesser des Drahtes 15 ist vorzugsweise so gewählt, daß er sich in die Nut 14 leicht einlegen, insbesondere einstecken läßt und an seinem Platz verharrt. Wie dargestellt (Fig. 2), besteht der Draht 15 aus einem durchgehenden, zentralen, eine « Seele bildenden Körper 31, der ringsum von einem Mantel 32 umhüllt ist.

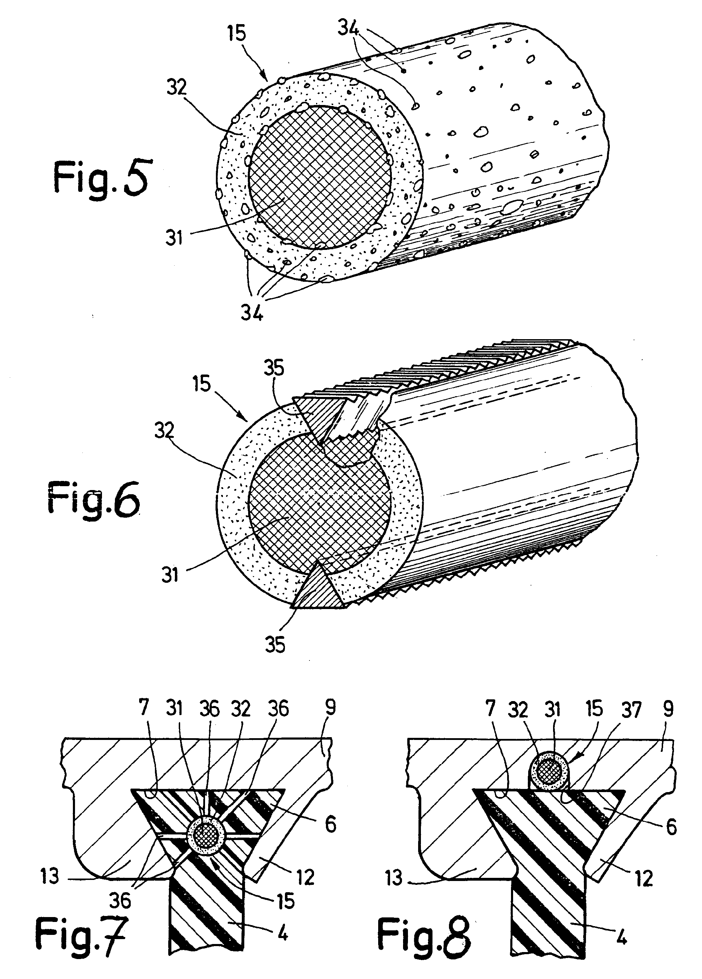

Das den Körper 31 bildende Material ist so gewählt, daß es durch Wärme in Querrichtung (radial) expandiert. Das den Mantel 32 bildende Material ist ein Kleber, der bei Anwendung von Druck und/oder Wärme zu fließen beginnt und sich in die Zwischenräume zwischen dem Ende 6 des Isolierstegs 4 und der Nut 7 ergießt, wenn das Material des Körpers 31 expandiert. Auf diese Weise wird eine großflächige Klebeverbindung zwischen dem Ende 6 des Isolierstegs 4 und der Innenseite der Nut 7 vermittelt, wie schematisch in Fig. 4 dargestellt ist. Insgesamt wird durch diese Maßnahme die Schubfestigkeit der beiden das Verbundprofil 1 bildenden Teile 2, 3 durch Ausbildung einer verstärken Klebeverbindung erhöht.

Der Körper 31 ist vorzugsweise ein Monofilament aus Kunststoff, insbesondere aus gerecktem oder ungerecktem einheitlichem Copolyamid oder Äthylencopolymerisat oder ionomere Kunststoff. Als Material für den Mantel 32 eignen sich Schmelzkleber in der Form von Copolymerisaten auf Acrylsäure und Acrylsäure-ester-Basis oder Äthylencopolymerisaten sowie ionomere Schmelzkleber; auch Duroplaste sind für den Mantel 32 verwendbar.

Bei besonders bevorzugten Ausführungsformen der Erfindung können die für die Bildung des Körpers 31 verwendeten Materialien auch ein bei Anwendung von Druck und/oder Wärme expandierendes Treibmittel enthalten, welches die Querausdehnung des Körpers 31 begüngstigt. Als Treibmittel können beispielsweise verwendet werden : Azodiacaronamide und/oder Natriumbicarbonat.

Die in Fig. 5 dargestellte Ausführungsform einer Schnur oder eines Drahtes 15 besteht wiederum aus einem Innenkörper 31 und einem diesen umgebenden Mantel 32. In den Mantel 32 sind harte, scharfkantige Partikel 34, insbesondere Metallteilchen, Metallspäne, Quarzkörnerod. dgl., eingebettet, die beim Expandieren des Körpers 31 und beim Schmelzen des Mantels 32 den Reibschluß gegenüber den Innenseiten der Nut 7 erhöhen, wodurch die Schubfestigkeit zwischen dem Isoliersteg 4, 5 und den Verbundprofilteilen 2, 3 weiterhin erhöht ist.

In Fig. 6 sind in den Klebemantel 32 und teilweise auch in den expandierfähigen Körper 31 zwei Metalldrähte 35, beispielsweise aus Strahl, von dreieckigem Profil und aufgerauhter, insbesondere geriefter Oberfläche eingelegt, wobei die geriefte Oberfläche etwas gegenüber der Umfangsfläche des Mantels 32 vorsteht. Die Drähte 35 sind vorzugsweise an ihren drei Seiten aufgerauht, insbesondere quergerieft. Beim Expandieren des Körpers 31 und Schmelzen des Mantels 32 werden die Drähte 35 radial nach außen verschoben und gelangen in formschlüssigen Eingriff mit den Enden der Nut 7 bzw. der Oberseite des Isolierstegs 4. Wenn insbesondere an den Innenseiten der Nut 7 eine Rändelung oder andere Oberflächenrauhigkeit vorgesehen ist, entsteht ein besonders guter formschlüssiger Eingriff. Die Drähte 35 erstrecken sich, wie aus Fig. 6 ersichtlich ist, achsparallel im Körper 31 und Mantel 32.

Bei der in Fig. 7 gezeigten Ausführungsform ist ein wiederum aus Körper 31 und Mantel 32 bestehender Draht 15 ingesamt in das Ende 6 des Isolierstegs 4 eingelegt und allseits von diesem umschlossen. Im Ende 6 des Isolierstegs 4 erstrecken sich radial verlaufende Kanäle 36, die vom Außenumfang des Drahtes 15 bis zu den Außenseiten des Endes 6 reichen. Wenn unter dem Einfluß von Wärme der Körper 31 expandiert und das Material des Mantels 32 schmilzt, wird das geschmolzene Klebematerial des Mantels 32 durch die Kanäle 36 hindurch in den Zwischenraum zwischen dem Ende 6 des Isolierstegs 4 und den Innenseiten der Nut 7 gepreßt, wo es sich gleichmäßig verteilt und zu einer verbesserten, großflächigen Klebeverbindung führt. Auf diese Weise ist ein gezieltes Einspritzen des Klebstoffes an die gewünschte Stelle möglich.

Die in Fig. 8 dargestellte Verfahrensvariante entspricht in ihrer Wirkungsweise den anhand von Fig. 3 bis 7 erläuterten Verfahren. Im Gegensatz zu Fig. 3 bis 7 ist in Fig. 8 der biegsame, aus Körper 31 und Mantel 32 bestehende Draht 15 nicht in eine Nut im Ende 6 des Steges 4, sondern in eine Nut 37 des Verbundprofilteiles 3 eingelegt. Beim Expandieren des Körpers 31 und Schmelzen des aus Kleber bestehenden Mantels 32 wird einerseits das Ende 6 des Isolierstegs 4 unter Erzeugung eines verbesserten Formschlusses fest in die Nut 7 hineingepreßt, während andererseits der Kleber des Mantels 32 sich gleichmäßig zwischen dem Ende 6 und den Innenseiten der Nut 7 verteilt.

Besonders vorteilhaft ist es, wenn man die für eine Modifizierung, insbesondere Verformung eines thermosensitiven Zusatzmaterials erforderliche Wärme aus einem Verfahrensschritt gewinnt, der ohnehin bei der Herstellung des in Fig. 1 dargestellten Verbundprofils ausgeführt werden muß. Ein solcher Schritt ist beispielsweise eine Nachbehandlung des aus den Teilen 2, 3 und den Isolierstegen 4, 5 bestehenden Verbundprofils in Gestalt einer Eloxierung oder Einbrennlackierung. Die bei diesen Vorgängen erforderlichen Temperaturen reichen, so wurde gefunden, aus, um das Zusatzmaterial in der gewünschten Weise thermisch zu aktivieren, insbesondere zu expandieren oder zum Schmelzen zu bringen.

Bei anderen Ausführungsformen der Erfindung kann jedoch ein für die Modifizierung des Zusatzmaterials erforderlicher Druck auch zusätzlich und in einem besonderen Verfahrensschritt aufgebracht werden. Das gleiche gilt für eine Erwärmung des Zusatzmaterials. Eine solche Erwärmung kann beispielsweise durch Ultraschall- oder Hochfrequenzbehandlung vollzogen werden.

## Patentansprüche

1. Verfahren zum Verbinden der metallischen Innen- und Außenteile (2 bzw. 3) eines Verbundprofils (1) mit einem Isoliersteg (4, 5), der mit seinen Enden (6) in Nuten (7) der Innen- und Außenteile (2, 3) eingreift und durch Andrücken von diese Nuten (7) begrenzenden Stegen (12) an die Enden (6) fest mit den Innen- und Außenteilen (2, 3) verbunden wird, wobei man im Bereich der Enden (6) des Isolierstegs (4, 5) in dort vorgesehene Ausnehmungen (14, 37) ein klebendes, expandierbares, in Längsrichtung des Isoliersteges (4, 5) verlaufendes Zusatzmaterial mit in die Nuten (7) der Innen- und Außenteile (2, 3) einbringt und es durch Wärme in seinen Materialeigenschaften derart modifiziert, daß sich ein verbesserter Stoffschluß zwischen Isoliersteg (4, 5) und den Innen- und Außenteilen (2, 3) des Verbundprofils (1) ergibt,
dadurch gekennzeichnet,
daß man als Zusatzmaterial einen biegsamen Draht (15) aus einem in Querrichtung expandierbaren Körper (31) verwendet, auf den ein klebefähiger Mantel (32) aufgebracht ist, welcher den Körper (31) ringsum umhüllt und zu fließen beginnt und sich in die Zwischenräume zwischen den Enden (6) des Isolierstegs (4, 5) und den Nuten (7) ergießt, wenn das Material des Körpers (31) expandiert.

2. Verfahren nach Anspruch 1, dadurch gekennzeichnet, daß man einen Körper (31) aus einem längsgereckten Werkstoff verwendet, der bei Erwärmung in Querrichtung expandiert.

3. Verfahren nach Anspruch 1 oder 2, dadurch gekennzeichnet, daß an den mit dem Isoliersteg (4) zu verbindenden Flächen der Nuten (7) und/oder am Isoliersteg (4,5) selbst Rändelungen, Hinterschneidungen, Aufrauhungen oder dgl. vorgesehen werden, in die das Zusatzmaterial (31, 32) eindringt.

4. Verfahren nach Anspruch 1, 2 oder 3, dadurch gekennzeichnet, daß man das Zusatzmaterial (31, 32) durch Ultraschall- oder Hochfrequenzbehandlung erwärmt.

5. Verfahren nach einem der Ansprüche 1 bis 4, dadurch gekennzeichnet, daß man das Zusatzmaterial (31, 32) im Verlauf einer Nachbehandlung des Verbundprofils (1), insbesondere im Verlauf einer Eloxierung oder Einbrennlackierung desselben erwärmt.

6. Verfahren nach Anspruch 1, dadurch gekennzeichnet, daß der mit dem Mantel (32) versehene (31) in einer Ausnehmung (14) an den Enden (6) des Isolierstegs (4, 5) angeordnet wird.

7. Verfahren nach Anspruch 1 oder 6, dadurch gekennzeichnet, daß der Körper (31) ein Monofilament aus Kunststoff, vorzugsweise aus gerecktem oder ungerecktem Polyamid oder Polyäthylenterephthalat ist.

8. Verfahren nach einem der voranstehenden Ansprüche, dadurch gekennzeichnet, daß der Mantel (32) aus einem Schmelzkleber, vorzugsweise auf Basis eines Äthylen- oderAcrylester-Copolymerisats, aus einem Copolyamid, einem Copolyester, einem Butadienblockcopolymerisat oder aus einem Duroplasten besteht.

9. Verfahren nach einem der voranstehenden Ansprüche, dadurch gekennzeichnet, daß der Mantel (32) aus einem drucksensitiven Kleber besteht.

10. Verfahren nach einem der voranstehenden Ansprüche, dadurch gekennzeichnet, daß in den Körper (31) ein bei Druck oder Wärme expandierendes Treibmittel eingebracht wird.

11. Verfahren nach Anspruch 10, dadurch gekennzeichnet, daß man als Treibmittel Azodicarbonamide und/oder Natriumcarbonat verwendet.

12. Verfahren nach einem der voranstehenden Ansprüche, dadurch gekennzeichnet, daß in den Körper (31) und/oder den Mantel (32) Hartstoff-Partikel, insbesondere Metallteilchen, Metallspäne, Quarzkörner, eingebracht werden, die den Reibschluß gegenüber den metallischen Innen-und Außenteilen (2, 3) des Verbundprofils (1) erhöhen.

13. Verfahren nach einem der voranstehenden Ansprüche, dadurch gekennzeichnet, daß in den Körper (31) und/oder den Mantel (32) ein Metalldraht (35) mit aufgerauhter Oberfläche eingelegt wird.

14. Verfahren nach einem der voranstehenden Ansprüche, dadurch gekennzeichnet, daß von einem den ummantelten Körper (31, 32) aufnehmenden Raum im Ende (6) des Isolierstegs (4, 5) Kanäle (36) ausgehen, durch die der den Mantel (32) bildende, aktivierte Kleber nach außen fließen kann.

15. Verfahren nach einem der voranstehenden Ansprüche, dadurch gekennzeichnet, daß der ummantelte Körper (31, 32) in Ausnehmungen (37) der metallischen Innen- und Außenteile (2, 3) des Verbundprofils (1) angeordnet wird.

## Claims

1. A process for connecting the metallic inner and outer parts (2, 3) of a composite profile member (1) to an insulating web (4, 5), the ends (6) of the insulating web engaging with grooves (7) on the inner and outer parts (2, 3) and the insulating web (4, 5) being connected securely to the inner and outer parts (2, 3) by pressing webs (12) defining these grooves (7) to the ends (6), wherein an adhesive, expansible additional material extending in the longitudinal direction of the insulating web (4, 5) is introduced also into the grooves (7) of the inner and outer parts (2, 3) at the region of the ends (6) of the insulating web (4, 5) and in recesses (14, 37) being provided there and the physical properties of the additional material are modified by heat such that an improved locking contact is produced between the insulating web (4, 5) and the inner and outer parts (2, 3) of the composite profile member (1), characterized in that the additional material used is in the form of a flexible wire (15) made from a member (31) being expansible in the transverse direction, an adhesive coating (32) being applied to the member (31), the coating (32) envelopping the member (31) on all sides and beginning to become fluid and flowing into the spaces between the ends (6) of the insulating web (4, 5) and the grooves (7) on expansion of the material of the member (31).

2. A process according to Claim 1, characterized in that a member (31) of a longitudinally stretched material is used, the member (31) being expansible in the transverse direction on heating.

3. A process according to Claim 1 or 2, characterized in that milled edges (24, 25), undercuts, roughened portions or the like are provided on the faces of the grooves (7) to be joined to the insulating web (4) and/or on the insulating web (4, 5) itself, the filler material (31, 32) penetrating into the milled edges (24, 25).

4. A process according to Claim 1, or 3, characterized in that the filler material (31,32) is heated by ultrasonic or high-frequency treatment.

5. A process according to any one of Claims 1 to 4, characterized in that the filler material (31, 32) is heated in the course of a subsequent treatment of the composite profile member (1), particularly the course of an anodic oxidation or stove- enamelling thereof.

6. A process according to Claim 1, characterized in that the member (31) provided with the coating (32) is disposed in recesses (14) at the ends (6) of the insulating web (4, 5).

7. A process according to Claim 1 or 6, characterized in that the member (31) is a monofilament of plastics material, preferably of stretched or non- stretched polyamide or polyethylene terephthalate.

8. A process according to any one of the preceding Claims, characterized in that the coating (32) comprises a fusion adhesive, preferably based on an ethylene or acrylester copolymerizate of a copolyamide, a copolyester, a butadiene block copolymerizate or a duroplastic.

9. A process according to any one of the preceding Claims, characterized in that the coating (32) comprises a pressure-sensitive adhesive.

10. A process according to any one of the preceding Claims, characterized in that a working fluid expansible under pressure or heat is introduced into the member (31).

11. A process according to Claim 10, characterized in that the working fluid used is in the form of azodicarbonamides and/or sodium bicarbonate.

12. A process according to any one of the preceding Claims, characterized in that particles of hard material, particularly metal particles, metal chippings, quartz grains, are introduced into the member (31) and/or the coating (32), the particles increasing the frictional locking of the composite profile member(1) to the metal inner and outer parts (2, 3).

13. A process according to any one of the preceding Claims, characterized in that a metal wire (35) having a roughened surface is inserted into the member (31) and/or the coating (32).

14. A process according to any one of the preceding Claims, characterized in that ducts (36) issue from a space receiving the coated member (31, 32) in the end (6) of the insulating web (4, 5) through which the activated adhesive forming the coating (32) can flow outwards.

15. A process according to any one of the preceding Claims, characterized in that the coated member (31, 32) is disposed in recesses (37) of the metal inner and outer parts (2, 3) of the composite profile member (1).

## Revendications

1. Procédé d'assemblage des parties métalliques intérieures et extérieures (respectivement 2 et 3) d'un profilé composite (1) à une traverse isolante (4, 5) dont les extrémités (6) pénètrent dans des rainures (7) des parties intérieures et extérieures (2, 3) et qui est assemblée fermement aux parties intérieures et extérieures (2, 3) en pressant les traverses (12) définées par les rainures (7) contre les extremités (6) selon lequel on introduit dans la zone des extrémités (6) de la traverse isolante (4, 5) dans les rainures (14, 37) prévues à cet endroit, une matière d'addition adhésive, expansible s'étendant en sens de la longueur de la traverse isolante (4, 5) dans les rainures (7) des parties intérieures et extérieures (2, 3) et dont on modifie les propriétés par chaleur, de telle sorte qu'il en résulte une adhérence améliorée entre la traverse isolante (4, 5) et les parties intérieures et extérieures (2, 3) du profilé composite (1), caractérisé en ce que l'on utilise comme matière d'addition un fil (15) souple en un corps (31) pouvant se dilater transversalement sur lequel est placé un revêtement (32) adhésif qui enveloppe entièrement le corps (31) et commence à couler et se déverse dans les espacements entre les extrémités (6) de la traverse isolante (4, 5) et les rainures (7) lorsque la matière du corps (31) se dilate.

2. Procédé selon la revendication 1, caractérisé en ce que l'on utilise un corps (31) faiten une matière étirée longitudinalement qui se dilate en direction transversale par échauffement.

3. Procédé selon la revendication 1 ou 2, caractérisé en ce qu'il est prévu sur les surfaces des rainures (7) à relier à la traverse isolante (4) et/ou sur la traverse isolante (4, 5) elle-même, un moletage (14, 25), des contredépouilles, des rugosités ou similaires dans lesquels la matière d'addition (31, 32) pénètre.

4. Procédé selon la revendication 1, 2 ou 3, caractérisé en ce que l'on chauffe la matière d'addition (31, 32) par ultrasons ou hautes fréquences.

5. Procédé selon l'une des revendications 1 à 4, caractérisé en ce que l'on échauffe la matière d'addition (31, 32) au cours d'un traitement ultérieur du profilé composite (1), notamment au cours d'une anodisation ou au cours d'une cuisson au four de la peinture de celui-ci.

6. Procédé selon la revendication 1, caractérisé en ce que le corps (31) pourvu du revêtement (32) est disposé dans un évidement (14) aux extrémités (6) de la traverse isolante (4, 5).

7. Procédé selon la revendication 1 ou 6, caractérisé en ce que le corps (31) est un monofilament de matière plastique, de preférence en polyamide ou en polyéthylène-téréphtalate étiré ou non étiré.

8. Procédé selon l'une des revendications précédentes, caractérisé en ce que le revêtement (32) est constitué d'une colle fusible, de préférence à base de copolymère d'ethylène ou d'acryl-ester, d'un copolyamide, d'un copolyester, d'un copolymère en masse de butadiène ou d'une matière thermodurcissable.

9. Procédé selon l'une des revendications précédentes, caractérisé en ce que le revêtement (32) est une colle sensible à la pression.

10. Procédé selon l'une des revendications précédentes, caractérisé en ce que l'on introduit dans le corps (31) un agent moussant expansible sous l'effet de la pression ou de la chaleur.

11. Procédé selon la revendication 10, caractérisé en ce que l'on utilise comme agent moussant de l'azodicarbonamide et/ou du bicarbonate de sodium.

12. Procédé selon l'une des revendication précédentes, caractérisé en ce que l'on introduit dans le corps (31) et/ou dans le revêtement (32) des particules de matière dure, notamment des particules métalliques, des copeaux métalliques, des grains de quartz qui accroissent l'adhérence par frottement avec les parties intérieures et extérieures (2, 3) du profilé composite (1).

13. Procédé selon l'une des revendication précédentes, caractérisé en ce que l'on insère dans le corps (31) et/ou le revêtement (32) un fil métallique (35) de surface rugueuse.

14. Procédé selon l'une des revendications précédentes, caractérisé en ce que des canaux (36) à travers lesquels la colle activée, formant le revêtement (32) peut s'écouler vers l'extérieur, partent d'un volume recevant le corps gainé (31, 32) à l'extrémité (6) de la traverse isolante (4, 5).

15. Procédé selon l'une des revendication précédentes, caractérisé en ce que le corps (31, 32) gainé est disposé dans des évidements (37) des parties métalliques intérieures et extérieures (2, 3) du profilé composite (1).
